**Europäisches Patentamt**

**European Patent Office**

**Office européen des brevets**

(11) Publication number: **0 456 823 B1**

# EUROPEAN PATENT SPECIFICATION

(45) Date of publication of patent specification: **06.12.95**  (51) Int. Cl.⁶: **C08L 27/06**, C08L 67/02, B29D 23/24, H01B 7/06

(21) Application number: **90900332.9**

(22) Date of filing: **07.12.89**

(86) International application number:
**PCT/JP89/01227**

(87) International publication number:
**WO 91/09085 (27.06.91 91/14)**

(54) **VINYL CHLORIDE RESIN COMPOSITION.**

(43) Date of publication of application:
**21.11.91 Bulletin 91/47**

(45) Publication of the grant of the patent:
**06.12.95 Bulletin 95/49**

(84) Designated Contracting States:
**BE DE FR GB IT NL**

(56) References cited:
**EP-A- 0 390 060**    **FR-A- 2 138 095**
**JP-A- 1 311 153**    **JP-A- 6 248 751**
**JP-A-62 104 860**    **JP-A-62 265 339**

**JOURNAL OF POLYMER SCIENCE, POLYMER CHEMISTRY EDITION. vol. 10, no. 10, 1972, NEW YORK US pages 3111 - 3112; ROGOZIN-SKY, KRAMER: 'determination of the gel content of vinyl chloride polymers and copolymers'**

(73) Proprietor: **SUMITOMO BAKELITE COMPANY LIMITED**
**2-2, Uchisaiwaicho 1-chome**
**Chiyoda-ku**
**Tokyo 100 (JP)**

(72) Inventor: **YAGI, Keisuke**
**2-19-21, Tenjincho**
**Takatsuki-shi**
**Osaka 569 (JP)**

(74) Representative: **Darby, David Thomas et al**
**Abel & Imray**
**Northumberland House**
**303-306 High Holborn**
**London WC1V 7LH (GB)**

**Description**

Technical Field

The present invention relates to a vinyl chloride resin composition which provides a rubbery elastic material small in temperature dependence of hardness and relates to a tube having heat distortion resistance and high impact resilience and a matte curl cord having high impact resilience which are made by molding the above vinyl chloride resin composition.

Background Art

In general, a vinyl chloride resin is larger than a rubber in temperature dependence of hardness. Therefore, grips and the like which are used outdoor, are apt to change in touch and have severe limitation. For example, in case of general vulcanized rubbers, temperature-dependent difference of hardness (JIS K 6301A type) is about 10 in the range of -20°C to 80°C and thus temperature dependence of hardness is small. In case of general non-rigid vinyl chloride resins, the dependence shows a high value of about 40 and they are generally inferior in temperature dependence of hardness. In order to reduce temperature dependence of hardness, use of a vinyl chloride resin containing a gel fraction has been considered, but temperature-dependent difference of hardness (JIS K 6301A type) has been improved only by about 5 in the range of -20°C to 80°C as compared with general non-rigid vinyl chloride resins.

Rubbers are mainly employed for uses which require heat distortion resistance and high impact resilience. This is because they possess heat distortion resistance and high impact resilience which are characteristics of rubbers. However, tubes which use a rubber, require vulcanization step and thus suffer from the problems that the number of operation steps increase and besides the material cannot be recycled. In order to solve these defects of rubbers, non-rigid vinyl chloride resins or thermoplastic elastomer resins are used in some of tubes, but since they are thermoplastic resins, they are low in heat distortion resistance and inferior in creep property and are limited in scope of use. A curl cord coated with a non-rigid vinyl chloride resin composition high in impact resilience which comprises a vinyl chloride resin containing a gel fraction to which a plasticizer is added, is widely used in place of urethane resin and polyester resin. However, although curl cords coated with conventional vinyl chloride resin compositions are inexpensive as compared with urethane and polyester resins and besides show no discoloration and have self-extinguishing properties, they are inferior to urethane or polyester resin-coated curl cords in impact resilience (JIS K6301, which is used also for the measurement referred to hereinafter), heat distortion degree (JIS K6723, which is used also for the measurement referred to hereinafter) and permanent compression set (JIS K6301, 70°C x 22 hr, which is used also for the measurement referred to hereinafter). Furthermore, in case of a use such as a curl cord for an automobile telephone set the body of which is small, urethane and polyester resins are too high in impact resilience, resulting in movement of the body of the telephone set, and vinyl chloride resins are too low in impact resilience and is inferior in spring back and there have been no vinyl chloride resins having proper impact resilience. Further, for some uses, the peculiar gloss of vinyl chloride resins is refused.

A sufficiently satisfactory solution has not been obtained for curl cords in which the conventional vinyl chloride resin composition is used.

That is, improvement of impact resilience by conventional methods has been contemplated by using vinyl chloride resins containing a gel fraction. However, these methods cannot attain conspicuous improvement. Furthermore, in order to take off gloss of vinyl chloride resins, extrusion temperature must be lowered and thus productivity decreases and generally, properties also tend to deteriorate.

With reference to improvements of the creep resistance, retention of shape at high temperature, and impact resilience of a vinyl chloride resin composition, it has been found that better creep resistance and retention of shape at high temperature as compared with those of general vinyl chloride resin compositions can be obtained by the resin composition of U.S.-A-4,340,530, namely, the composition comprising 100 parts by weight of a vinyl chloride resin consisting of 8-90% by weight of a tetrahydrofuran-insoluble polyvinyl chloride gel fraction and the remainder of a tetrahydrofuran-soluble fraction and 25-200 parts by weight of a plasticizer. However, although the above composition has an impact resilience of about 30-35% which is better than the 25-28% of general non-rigid vinyl chloride resin compositions, it is inferior in impact resilience to urethane and polyester resins of 60-70% impact resilience.

JP-A-62-48751 describes a solvent-resistant polyvinyl chloride composition and a flexible electric wire covered by that composition. The composition comprises 100 parts (by weight) polyvinyl chloride, average polymerization degree of at least 1800, 30 to 100 parts polyester plasticizer having an average molecular

EP 0 456 823 B1

weight of at least 6000, and 20 to 80 parts of one or more vinyl chloride copolymers selected from vinyl chloride-urethane copolymer, vinyl chloride-acrylic copolymer and vinyl chloride-vinyl acetate copolymer and optionally a flame retardant resin.

Under the circumstances, the inventors have made intensive research and as a result they have found the surprising facts that molded products which are excellent in creep resistance, heat distortion resistance such as heat distortion ratio and impact resilience, which are low in temperature dependence of hardness, which have good matte effect and which are superior in processability can be obtained by adding an appropriate amount of a copolyester resin having a hard and a soft segment to the main components of the resin composition of U.S.-A-4,340,530. Thus, the present invention has been accomplished.

An object of the present invention is to provide a molded product low in temperature dependence of hardness, specifically, having a temperature dependent-difference of hardness (JIS K 6301A type) of 25 or less in the range of -20°C to 80°C.

Another object of the present invention is to provide a curl cord coated with a vinyl chloride resin composition which is excellent in heat distortion resistances such as heat distortion ratio and permanent compression set, high in impact resilience, superior in processability and has superior matte effect.

Further another object of the present invention is to provide a tube made by molding a vinyl chloride resin composition which has molding processability similar to that of general thermoplastic resins though it has heat distortion resistance and high impact resilience close to those of rubbers.

Disclosure of Invention

That is, the present invention is a vinyl chloride resin composition which provides a rubbery elastic material small in temperature dependence of hardness a major proportion of which is composed of 100 parts by weight of a vinyl chloride resin comprising 8-90% by weight of a tetrahydrofuran-insoluble gel fraction and the remainder of a tetrahydrofuran-soluble fraction, 10-200 parts by weight of a copolyester resin having a hard and a soft segment and 25-200 parts by weight of a plasticizer.

Furthermore, the present invention provides a tube having heat distortion resistance and high impact resilience which is made by molding the above vinyl chloride resin composition.

Moreover, the present invention provides a matte curl cord of high impact resilience which is characterized by being coated with the above vinyl chloride resin composition which is excellent in heat distortion resistances such as heat distortion ratio and permanent compression set, high in impact resilience, superior in processability and has good matte effect.

The characteristic of the vinyl chloride resin composition of the present invention resides in that 10-200 parts by weight, preferably 30-100 parts by weight of a copolyester resin having a hard and a soft segment and 25-200 parts by weight, preferably 40-150 parts by weight of a plasticizer are blended with 100 parts by weight of a gel-containing vinyl chloride resin, and this has made it possible to produce molded products low in temperature dependence of hardness. If the copolyester resin is contained in an amount of less than 10 parts by weight, temperature dependence of hardness cannot be improved, and if the content of the copolyester resin exceeds 200 parts by weight, the composition sticks much to a kneader and it is not satisfactorily molten.

With reference to average polymerization degree of the tetrahydrofuran-soluble fraction of the gel-containing vinyl chloride resin, processability is improved with increase in polymerization degree. In general, average polymerization degree of 400-10000, preferably 1800-7000 is employed.

"Tetrahydrofuran-insoluble gel fraction" used in this specification and claims means an extraction residue obtained by subjecting to extraction with hot tetrahydrofuran for 22 hours by a Soxhlet's extractor and separating the extract by a 350 mesh filter.

Extrusion molding is mainly used for obtaining tubes of ordinary shape, but it is also possible to employ injection molding, blow molding or press molding for tubes of short and special shapes. The characteristic of the tube of the present invention resides in that partially crosslinked vinyl chloride resin is blended with a copolyester resin having a hard and a soft segment, and thereby it has become possible to produce a tube having heat distortion resistance and high impact resilience by molding methods similar to those used for thermoplastic resins. Amount of the crosslinked portion in the vinyl chloride resin is suitably 8-90% by weight from the points of heat distortion resistance and high impact resilience and processability.

Further characteristic of the present invention resides in that there is obtained an impact resilience of about 40-50% which is close to the 60-70% of a urethane or polyester resin, by coating a curl cord with a vinyl chloride resin composition a major proportion of which is composed of 100 parts by weight of a vinyl chloride resin comprising 8-90% by weight of a tetrahydrofuran-insoluble polyvinyl chloride gel fraction and the remainder of a tetrahydrofuran-soluble fraction, 10-200 parts by weight of a copolyester resin having a

3

hard and a soft segment and 25-200 parts by weight of a plasticizer.

For improving impact resilience, it is necessary to use at least three components, i.e., the main component consisting of the vinyl chloride resin of U.S.-A-4,340 ,530, 10-200 parts by weight of a copolyester resin having a hard and a soft segment and 25-200 parts by weight of a plasticizer. If any one of them is omitted, impact resilience cannot be close to that of a urethane or polyester resin.

When a polyvinyl chloride resin outside the scope of the present invention, namely, one which contains less than 8% by weight of a tetrahydrofuran-insoluble gel fraction, or one which contains no gel fraction is used, impact resilience cannot be improved to approximately that of a urethane or polyester resin.

In the composition of the present invention, a copolyester resin having a hard and a soft segment is added to improve the resulting molded product, and the addition amount thereof varies depending on the use object of the molded product. If the amount of a copolyester resin is less than 10 parts by weight, improvement of temperature dependence of hardness cannot be attained, and if it exceeds 200 parts by weight, the composition sticks much to a kneader to deteriorate operability, and many problems occur in processability. The especially preferred range is 30-100 parts by weight and good impact resilience and processability are obtained in this range.

Examples of such copolyester resins include those which have PBT (polybutadiene terephthalate) as a hard segment and poly(alkylene oxide) glycol in which the alkylene group has 2-10 carbon atoms, as a soft segment such as

poly(ethylene oxide) glycol,

poly(1,2- and 1,3- propylene oxide) glycol,

poly(tetramethylene oxide) glycol,

poly(pentamethylene oxide) glycol,

poly(hexamethylene oxide) glycol,

poly(heptamethylene oxide) glycol,

poly(octamethylene oxide) glycol,

poly(nonamethylene oxide) glycol, and

poly(1,2-butylene oxide) glycol; random or block copolymers of ethylene oxide and 1,2-propylene oxide, and polyformals prepared by reacting formaldehyde with a glycol such as propylene glycol or a glycol mixture such as a mixture of tetramethylene and pentamethylene glycols.

In the composition of the present invention, a plasticizer is added in order to impart rubbery elasticity to the resulting molded product and besides improve impact resilience, and addition amount thereof varies depending on the use object of the molded product. However, if amount of a plasticizer is too small, melting at high temperature and molding under high pressure are required and processing of the resin becomes difficult to result in brittle tubes of poor appearance. On the other hand, if a plasticizer is too much, there are various problems in processability and in practical use such as exudation of the plasticizer to the surface of the resulting tube to result in tackiness.

When the amount of plasticizer is less than 25 parts by weight, impact resilience decreases, and when it is more than 200 parts by weight, productivity and processability deteriorate. The especially preferred range is 40-150 parts by weight in which impact resilience and processability are superior.

As examples of such plasticizers, there are cited alkyl esters of aromatic polybasic acids such as dibutyl phthalate, dioctyl phthalate and butylbenzyl phthalate; alkyl esters of aliphatic polybasic acids such as dioctyl adipate, dioctyl azelate and dioctyl sebacate; esters of phosphoric acid such as tricresyl phosphate; and polyesters. There are no differences in impact resilience and processability for all of these plasticizers.

As the polyvinyl chloride resins used in the present invention, there may be used those which are used in U.S.-A-4,340,530, and so details thereof are omitted here, but they are characterized by comprising 8-90% by weight of a tetrahydrofuran-insoluble gel fraction and the remainder of a tetrahydrofuran-soluble fraction and include the following copolymers.

That is, as monomers copolymerizable with vinyl chloride, there are cited fatty acid vinyl esters, vinylidene halides, acrylic acid alkyl esters, methacrylic acid alkyl esters, acrylonitrile, alkylvinyl ethers, styrene, ethylene, urethane and derivatives thereof.

The vinyl chloride resin composition of the present invention can be utilized as such, but if necessary, may contain another thermoplastic resin, rubber, heat stabilizer, filler, pigment, processing aid, etc.

Other thermoplastic resins include general vinyl chloride resins, ethylene-vinyl acetate copolymer, chlorinated polyethylene, ABS resin, AS resin, urethane or acrylic resins, and NBR or CR, for example, are used as a rubber.

Heat stabilizers include lead type heat stabilizers such as tribasic lead sulfate; tin type stabilizers such as dibutyltin maleate; and metallic soaps such as zinc stearate, calcium stearate and barium stearate, and addition amount thereof is generally 20 parts by weight or less and can be used as required.

As fillers, there are cited, for example, carbon black, calcium carbonate, titanium oxide, talc, asbestos, aluminum hydroxide or magnesium hydroxide, and these can be used as required. Amount thereof is not limited, but they are generally used in an amount of 100 parts by weight or less.

Pigments include, for example, color carbon black, chrome yellow, titanium oxide or Phthalocyanine Green, and can be used depending on purpose.

Processing aids include, for example, low-molecular weight polyethylenes or higher fatty acid esters, which are usually used for vinyl chloride resins.

The vinyl chloride resin composition of the present invention can be granulated by the same processes as for conventional vinyl chloride resins. That is, the composition is mixed with, for example, plasticizer or stabilizer by a mixer such as super mixer or blender and the mixture is kneaded and granulated by, for example, a Banbury mixer, mixing roll or extruder. Like general non-rigid vinyl chloride resins, the granulated pellets can be subjected to, for example, injection molding, extrusion molding, press molding, blow molding or calender molding, and the processability is superior like non-rigid vinyl chloride resins.

It is due to the blending of a PVC containing a gel fraction with a copolyester resin having a hard and a soft segment that a vinyl chloride resin molded product of about 25 or less in temperature-dependent difference (in the range of -20°C to 80°C) of hardness (JIS K 6301A type) can be produced on a commercial basis according to the present invention.

Hitherto, temperature dependence of hardness of vinyl chloride resins has been considered to be inferior to that of rubbers. In order to reduce temperature dependence of hardness, normally a vinyl chloride resin containing a gel fraction has been used, but this has not improved temperature dependence of hardness so much. However, it becomes possible to produce elastic materials having a temperature-dependent difference of hardness (JIS K 6301A type) of 25 or less in the range of -20°C to 80°C by blending a copolyester resin with a vinyl chloride resin containing a gel fraction.

The vinyl chloride resin composition comprising a blend of a copolyester resin having a hard and soft segment and a vinyl chloride resin containing a gel fraction according to the present invention can be subjected to granulation by the same process as used for conventional vinyl chloride resins. That is, the composition is mixed with, for example, a plasticizer or a stabilizer by a mixer such as a super mixer or a blender, and the mixture is kneaded and granulated by, for example, a Banbury mixer, mixing roll or extruder. The granulated pellets can be subjected to injection molding, extrusion molding, blow molding, calender molding, and press molding like general non-rigid vinyl chloride resins, and the resulting molded products have a good appearance like general non-rigid vinyl chloride resins.

Other characteristics of the present invention are that cold resistance, tear strength and wear resistance can be improved as compared with general vinyl chloride resins.

The tube of the present invention is superior in processability like tubes made of general vinyl chloride resins and besides has heat distortion resistance and high impact resilience close to those of rubbers. Therefore, the present tube is used as tubes for covering iron wire such as leading tubes and tubes for piping in an engine room of an automobile, protective covering tubes for household appliances and electric wires, and tubes for construction and foods and furthermore, can also be used for transport parts the content of which is liquid, gas or solid.

The curl cord of the present invention is superior in processability and heat distortion resistance, has matte effect and is excellent in impact resilience like cords of general vinyl chloride resins.

The fact that high-temperature characteristics and low-temperature characteristics are improved by adding a copolyester resin naturally means that the curl cord is one which is covered with a vinyl chloride type thermoplastic resin which is satisfactory in creep resistance, retention of shape at high temperatures, oil resistance and heat aging resistance which is peculiar to a polyvinyl chloride type resin.

Best Mode for Carrying Out the Invention

The present invention is explained in detail by the following examples.

Example 1

To 100 parts by weight of a vinyl chloride polymer comprising 20% of a tetrahydrofuran-insoluble gel fraction and the remainder of a tetrahydrofuran-soluble fraction having an average polymerization degree of 5000 (UX-C manufactured by Sumitomo Chemical Co., Ltd.) were added 90 parts by weight of diisononyl phthalate, 3 parts by weight of a barium-zinc type stabilizer (AP-539 manufactured by Adeka Argus Co. Ltd.) and a copolyester resin (HYTREL 4057 manufactured by Toray DuPont Co.) in various amounts. The mixture was kneaded by a Banbury mixer to make pellets.

Pressed sheets were produced from the pellets, and temperature-dependent difference of hardness (JIS K6301) of the sheets was measured in the range of -20°C to 80°C, and the results were simultaneously compared with those of NBR, SBR, EPDM and general polyvinyl chloride. Temperature-dependent difference of hardness (JIS K6301) and productivity were evaluated in Table 1.

Table 1

| | Experiment No. | Addition amount of copolyester resin (part by weight) | Temperature-dependent difference of hardness (JIS K6301A type) -20°C to 80°C | Productivity Note (1) |
|---|---|---|---|---|
| Comparative Example | 1 (NBR) | – | 21 | – |
| | 2 (SBR) | – | 13 | – |
| | 3 (EPDM) | – | 11 | – |
| | 4 (General polyvinyl chloride) | 0 | 39 | Good |
| | 5 | 0 | 34 | Good |
| | 6 | 5 | 32 | Good |
| | 7 | 250 | – | Bad |
| Example | 8 | 10 | 27 | Good |
| | 9 | 30 | 25 | Good |
| | 10 | 60 | 23 | Good |
| | 11 | 100 | 19 | Somewhat good |
| | 12 | 200 | 16 | Somewhat good |

6

Note (1): Evaluation of productivity was carried out by comprehensively judging degree of sticking to the Banbury mixer and the rolls.

Good: No sticking occurred and operability was good.

Somewhat good: Some sticking to the kneader occurred.

Bad: Much sticking to the kneader occurred and operability was bad.

Example 2

To 100 parts by weight of a vinyl chloride polymer comprising 20% of a gel fraction and a tetrahydrofuran-soluble fraction having an average polymerization degree of 5000 (UX-C manufactured by Sumitomo Chemical Co., Ltd.) were added 90 parts by weight of dioctyl phthalate, 3 parts by weight of a barium-zinc type stabilizer (AP-539 manufactured by Adeka Argus Co. Ltd.) and a copolyester resin (HYTREL 4057 manufactured by Toray DuPont Co.) in various amounts. The mixture was kneaded by a Banbury mixer to make pellets. Pressed sheets were prepared from the pellets and were evaluated on heat distortion, impact resilience and operability. The results are shown in Table 2.

Table 2

| Experiment No. | Addition amount of copolyester resin (part by weight) | Impact resilience 3) (%) | Heat distortion resistance 2) | Productivity 1) |
|---|---|---|---|---|
| 1 (Comparative Example) | 0 | 23 | Large distortion | Good |
| 2 ( " ) | 2 | 25 | " | " |
| 3 (Example) | 10 | 32 | Somewhat large distortion | " |
| 4 ( " ) | 30 | 35 | Slight distortion | " |
| 5 ( " ) | 60 | 40 | " | " |
| 6 ( " ) | 100 | 48 | " | " |
| 7 ( " ) | 200 | 50 | " | Somewhat good |
| 8 (Comparative Example) | 300 | — | " | Bad |

Note (1): Evaluation of productivity was the same as in Table 1.

Note (2): Heat distortion resistance was evaluated by measuring heat distortion rate (JIS-K-6723) of the pressed products.

Note (3): Impact resilience was in accordance with JIS K6301.

As clear from the above results, when the copolyester resin was used in an amount of 10-200 parts by weight, good impact resilience, processability and heat distortion resistance were obtained, and they were superior especially when it was used in an amount of 30-90 parts by weight.

8

Example 3

The compositions of Experiment Nos. 1 and 5 used in Example 2 were extruded into molded products having an outer diameter of 12 mm∅ and having an iron core of 6 mm∅ in the central portion through a cross die of an extruder of 50 mm.

The resulting tube-like molded products were cut to a length of 100 mm for examination of heat distortion resistance. They were kept horizontally in an oven of 160°C under application of a load of 1 kg/100 mm for 1 hour and taken out into room temperature, and degree of distortion of the molded products after removal of the load was confirmed. The results are shown in Table 3.

Table 3

| Experiment No. | Heat distortion resistance |
|---|---|
| 1 (Comparative example) | The product was molten and the iron core was exposed. |
| 5 | Substantially no distortion occurred. |

Example 4

A copolyester resin (HYTREL 4057 manufactured by Toray DuPont Co.) was added to a composition composed of 100 parts by weight of a vinyl chloride resin containing 15% by weight of a tetrahydrofuran-insoluble gel fraction and a soluble fraction of 5000 in average polymerization degree which was prepared by the method shown in U.S.-A-4,340,530, 90 parts by weight of diisodecyl phthalate, and 3 parts by weight of a barium-zinc type stabilizer (AP-539 manufactured by Adeka Argus Co.). The mixture was kneaded by a Banbury mixer to prepare pellets. Pressed sheets were prepared from the pellets, and impact resilience and heat distortion rate of them were measured and were evaluated together with productivity. The results are shown in Table 4.

Table 4

| Experiment No. | Addition amount of copolyester resin (part by weight) | Impact resilience (%) Note (3) | Heat distortion resistance Note (2) | Productivity Note (1) | Matte property Note (4) |
|---|---|---|---|---|---|
| 1 (Comparative Example) | 0 | 23 | Large distortion | Good | Good |
| 2 ( " ) | 2 | 25 | = | = | = |
| 3 (Example) | 10 | 32 | Somewhat large distortion | = | = |
| 4 ( = ) | 30 | 35 | Slight distortion | = | = |
| 5 ( = ) | 60 | 40 | = | = | = |
| 6 ( = ) | 100 | 48 | = | = | = |
| 7 ( = ) | 200 | 50 | = | Somewhat good | = |
| 8 (Comparative Example) | 300 | - | - | Bad | - |

Notes (1), (2) and (3): Same as in Table 2 mentioned above.

Note (4): Degree of matting was examined on extruded tapes of ⌀20 mm.

   Good: High matte effect.

   Somewhat good: Semimatte.

   Bad: Glossy

As clear from the above results, when the copolyester resin was used in an amount of 10-200 parts by weight, good impact resilience, processability and heat distortion resistance were obtained, and these were especially superior when it was used in an amount of 30-100 parts by weight.

Example 5

One hundred parts by weight of a vinyl chloride polymer containing a gel fraction in various amounts which was prepared by the method shown in U.S.-A-4,340,530, was mixed with a composition composed of 90 parts by weight of diisodecyl phthalate, 3 parts by weight of a barium-zinc type stabilizer (AP-539 manufactured by Adeka Argus Co.) and 60 parts by weight of a copolyester resin (HYTREL 4057 manufactured by Toray DuPont Co.), and the mixture was kneaded by a Banbury mixer to prepare pellets.

Pressed sheets were prepared from the pellets, and matte property and productivity of the sheets were evaluated in the same manner as in Example 4. The results are shown in Table 5.

Table 5

| Experiment No. | Gel content | Average polymerization degree of soluble fraction | Matte property | Productivity |
|---|---|---|---|---|
| 9 (Comparative Example) | 0 | 1300 | Bad | Bad |
| 10 ( " ) | 3.0 | 4800 | Bad | Good |
| 11 | 12.0 | 3700 | Good | Good |
| 12 | 31.0 | 2550 | Good | Good |
| 13 | 55.0 | 1890 | Good | Somewhat good |
| 14 (Comparative Example) | 91.0 | 800 | Good | Bad |

Industrial Applicability

The vinyl chloride resin composition of the present invention is industrially very useful as molding materials for tubes having heat distortion resistance and high impact resilience and matte curl cords having

EP 0 456 823 B1

excellent high impact resilience. HYTREL is a Registered trade mark.

**Claims**

1. A vinyl chloride resin composition which provides a rubbery elastic material small in temperature dependence of hardness, a major proportion of which is composed of 100 parts by weight of a vinyl chloride resin comprising 8-90% by weight of a tetrahydrofuran-insoluble gel fraction and the remainder of a tetrahydrofuran-soluble fraction, 10-200 parts by weight of a copolyester resin having a hard and a soft segment and 25-200 parts by weight of a plasticizer.

2. A composition according to claim 1, wherein the amount of the copolyester resin is 30-100 parts by weight.

3. A composition according to claim 1, wherein the amount of the plasticizer is 40-150 parts by weight.

4. A composition according to claim 1, wherein the average polymerization degree of the tetrahydrofuran-soluble fraction of the vinyl chloride resin is 400-10000, preferably 1800-7000.

5. A vinyl chloride resin tube having heat distortion resistance and high impact resilience, which comprises 100 parts by weight of a vinyl chloride resin comprising 8-90% by weight of a tetrahydrofuran-insoluble polyvinyl chloride gel fraction and the remainder of a tetrahydrofuran-soluble fraction, 10-200 parts by weight of a copolyester resin having a hard and a soft segment and 25-200 parts by weight of a plasticizer.

6. A tube according to claim 5, wherein the amount of the copolyester resin is 30-100 parts by weight.

7. A tube according to claim 5, wherein the amount of the plasticizer is 40-150 parts by weight.

8. A tube according to claim 5, wherein the average polymerization degree of the tetrahydrofuran-soluble fraction of the vinyl chloride resin is 400-10000, preferably 1800-7000.

9. A matte curl cord having high impact resilience coated with a vinyl chloride resin composition a major proportion of which is composed of 100 parts by weight of a vinyl chloride resin comprising 8-90% by weight of a tetrahydrofuran-insoluble polyvinyl chloride gel fraction and the remainder of a tetrahydrofuran-soluble fraction, 10-200 parts by weight of a copolyester resin having a hard and a soft segment and 25-200 parts by weight of a plasticizer.

10. A curl cord according to claim 9, wherein the amount of the copolyester resin is 30-100 parts by weight.

11. A curl cord according to claim 9, wherein the amount of the plasticizer is 40-150 parts by weight.

12. A curl cord according to claim 9, wherein the average polymerization degree of the tetrahydrofuran-soluble fraction of the vinyl chloride resin is 400-10000, preferably 1800-7000.

**Patentansprüche**

1. Eine Vinylchloridharz-Zusammensetzung, die ein kautschukelastisches Material bereitstellt mit geringer Temperaturabhängigkeit der Härte, wobei ein Hauptteil dieser Zusammensetzung zusammengesetzt ist aus 100 Gewichtsteilen eines Vinylchloridharzes umfassend 8 bis 90 Gew.-% einer Tetrahydrofuran-unlöslichen Gelfraktion und die restlichen Gewichtsprozent einer Tetrahydrofuran-löslichen Fraktion, 10-200 Gewichtsteilen eines Copolyesterharzes mit einem harten und einem weichen Segment, und 25-200 Gewichtsteilen eines Weichmachers.

2. Eine Zusammensetzung gemäß Anspruch 1, in der die Menge an Copolyesterharz 30-100 Gewichtsteile beträgt.

13

3. Eine Zusammensetzung gemäß Anspruch 1, in der die Menge an Weichmacher 40-150 Gewichtsteile beträgt.

4. Eine Zusammensetzung nach Anspruch 1, in der der Durchschnitts-Polymerisationsgrad der Tetrahydrofuran-löslichen Fraktion des Vinylchloridharzes 400-10000, vorzugsweise 1800 bis 7000 ist.

5. Eine Vinylchloridharz-Röhre mit Formbeständigkeit in der Wärme und hochschlagfester Rückprall-Elastizität, umfassend 100 Gewichtsteile eines Vinylchloridharzes, umfassend 8-90 Gew.-% einer Tetrahydrofuranunlöslichen Polyvinylchlorid-Gelfraktion und die restlichen Gewichtsprozent einer Tetrahydrofuran-löslichen Fraktion, 10-200 Gewichtsteile eines Copolyesterharzes mit einem harten und einem weichen Segment, und 25-200 Gewichtsteile eines Weichmachers.

6. Eine Röhre gemäß Anspruch 5, in der die Menge an Copolyesterharz 30-100 Gewichtsteile beträgt.

7. Eine Röhre gemäß Anspruch 5, in der die Menge an Weichmacher 40-150 Gewichtsteile beträgt.

8. Eine Röhre gemäß Anspruch 5, in der der Durchschnitts-Polymerisationsgrad der Tetrahydrofuran-löslichen Fraktion des Vinylchloridharzes 400-10000, vorzugsweise 1800-7000 ist.

9. Eine matte bzw. glanzlose spiralförmig gewundene Schnur (Spiralschnur) mit einer hochschlagfesten Rückprall-Elastizität, beschichtet mit einer Vinylchloridharz-Zusammensetzung aus einem Hauptteil, zusammengesetzt aus 100 Gewichtsteilen eines Vinylchloridharzes umfassend 8-90 Gew.-% einer Tetrahydrofuran-unlöslichen Polyvinylchlorid-Gelfraktion und die restlichen Gewichtsprozent einer Tetrahydrofuran-löslichen Fraktion, 10-200 Gewichtsteilen eines Copolyesterharzes mit einem harten und einem weichen Segment, und 25-200 Gewichtsteilen eines Weichmachers.

10. Eine spiralförmig gewundene Schnur gemäß Anspruch 9, in der die Menge an Copolyesterharz 30-100 Gewichtsteile beträgt.

11. Eine spiralförmig gewundene Schnur gemäß Anspruch 9, in der die Menge an Weichmacher 40-150 Gewichtsteile beträgt.

12. Eine spiralförmig gewundene Schnur gemäß Anspruch 9, in der der Durchschnitts-Polymerisationsgrad der Tetrahydrofuran-löslichen Fraktion des Vinylchloridharzes 400-10000, vorzugsweise 1800-7000 ist.

**Revendications**

1. Une composition de résine de chlorure de vinyle qui donne une matière élastique caoutchouteuse ayant une faible dépendance de la dureté envers la température, dont une proportion prédominante est constituée par 100 parties en poids d'une résine de chlorure de vinyle comprenant 8 à 90 % en poids d'une fraction de gel insoluble dans le tétrahydrofuranne et le reste d'une fraction soluble dans le tétrahydrofuranne, 10 à 200 parties en poids d'une résine copolyester ayant un segment dur et un segment mou et 25 à 200 parties en poids d'un plastifiant.

2. Une composition selon la revendication 1, dans laquelle la quantité de la résine copolyester est de 30 à 100 parties en poids.

3. Une composition selon la revendication 1, dans laquelle la quantité du plastifiant est de 40 à 150 parties en poids.

4. Une composition selon la revendication 1, dans laquelle le degré moyen de polymérisation de la fraction soluble dans le tétrahydrofuranne de la résine de chlorure de vinyle est de 400 à 10 000, de préférence 1800 à 7000.

5. Un tube en résine de chlorure de vinyle ayant de la résistance à la déformation à chaud et une grande résilience au choc, qui comprend 100 parties en poids d'une résine de chlorure de vinyle comprenant 8 à 90 % en poids d'une fraction de gel de poly(chlorure de vinyle) insoluble dans le tétrahydrofuranne et le reste d'une fraction soluble dans le tétrahydrofuranne, 10 à 200 parties en poids d'une résine copolyester ayant un segment dur et un segment mou et 25 à 200 parties en poids d'un plastifiant.

6. Un tube selon la revendication 5, dans lequel la quantité de la résine copolyester est de 30 à 100 parties en poids.

7. Un tube selon la revendication 5, dans lequel la quantité du plastifiant est de 40 à 150 parties en poids.

8. Un tube selon la revendication 5, dans lequel le degré moyen de polymérisation de la fraction soluble dans le tétrahydrofuranne de la résine de chlorure de vinyle est de 400 à 10 000, de préférence 1800 à 7000.

9. Un cordon spiralé mat ayant une grande résilience au choc, revêtu d'une composition de résine de chlorure de vinyle dont une proportion prédominante est constituée par 100 parties en poids d'une résine de chlorure de vinyle comprenant 8 à 90 % en poids d'une fraction de gel de poly(chlorure de vinyle) insoluble dans le tétrahydrofuranne et le reste d'une fraction soluble dans le tétrahydrofuranne, 10 à 200 parties en poids d'une résine copolyester ayant un segment dur et un segment mou et 25 à 200 parties en poids d'un plastifiant.

10. Un cordon spiralé selon la revendication 9, dans lequel la quantité de la résine copolyester est de 30 à 100 parties en poids.

11. Un cordon spiralé selon la revendication 9, dans lequel la quantité du plastifiant est de 40 à 150 parties en poids.

12. Un cordon spiralé selon la revendication 9, dans lequel le degré moyen de polymérisation de la fraction soluble dans le tétrahydrofuranne de la résine de chlorure de vinyle est de 400 à 10 000, de préférence 1800 à 7000.